# EUROPÄISCHE PATENTSCHRIFT

(11) **EP 2 108 733 B1**
(45) Veröffentlichungstag und Bekanntmachung des Hinweises auf die Patenterteilung: **06.03.2013**
(21) Anmeldenummer: 08154201.1
(22) Anmeldetag: 08.04.2008
(51) Int. Cl.: D06M 11/17, D06M 11/20, D06M 16/00, A01N 59/10, A01N 59/14

(54) **Mit einem Insektenschutzmittel behandelte natürliche Fasermaterialien, Verfahren und Verwendung**
Insect repellent treated natural fibre materials, process and use
Matières fibreuses naturelles traitées avec un produit de protection contre les insectes, procédé et utilisation

(43) Veröffentlichungstag der Anmeldung: 14.10.2009
(73) Patentinhaber: THOR GmbH, 67346 Speyer (DE)
(72) Erfinder: Butz, Volker, 67434, Neustadt/Weinstraße (DE); Erm, Harald, 67436, Speyer (DE)

(56) Entgegenhaltungen:
- CN-A- 1 876 954
- FR-A- 518 821
- GB-A- 453 053
- DATABASE WPI Week 200317 Thomson Scientific, London, GB; AN 2003-173583 XP002516276 & RU 2 191 230 C1 (KIRILLIN A A) 20. Oktober 2002 (2002-10-20)

## Beschreibung

Die vorliegende Erfindung betrifft Mittel zum Schutz von natürlichen Fasermaterialien wie Proteinfasermaterialien, insbesondere Wolle, Seide, Pelze und Federn sowie Zellulosefasermaterialien, insbesondere Flachs, gegen den Befall durch Schädlinge, wie Motten- und Käferlarven. Ebenfalls betrifft die Erfindung ein Verfahren zum Schutz dieser Materialien gegenüber diesen Schädlingen, indem das zu schützende Material mit dem erfindungsgemäßen Mittel ausgerüstet wird. Ein weiterer Gegenstand der vorliegenden Erfindung ist das mit dem erfindungsgemäßen Mittel ausgerüstete Material selbst.

Aus der deutschen Patentschrift DE 1 003 717 sind halogenierte wie auch sulfonierte Derivate des Diphenylharnstoffs bekannt, welche eine Wirksamkeit gegen Larven der Kleidermotte und von Anthrenus- und Attagenusarten aufweisen. Sie eignen sich daher zum Schutz von Wolle, Pelzen und Federn gegen Schädlingsbefall bzw. Keratinfraß.

Es ist auch bekannt, dass bestimmte synthetische Pyrethroide zur Bekämpfung von Keratin fressenden Schädlingen verwendet werden können, siehe hierzu beispielsweise DE 2 923 217 A1 bzw. US 4,219,593. Diese Pyrethroide wirken insbesondere gegen Mottenlarven, während ihre Wirkung gegen Larven des Teppichkäfers gering ist.

Ferner ist aus DE 10 2006 016 907 A1 bekannt, Insektenabwehrstoffe zu verkapseln und diese Kapseln unter Zuhilfenahme von Bindemitteln dauerhaft an Textilien zu binden.

GB 453 053 A offenbart ein Verfahren für Ausrüstung von natürlichen Fasermaterialien gegen Befall und Fraßschäden durch Schädlinge. Das Verfahren kennzeichnet sich dadurch aus, dass man das natürliche Fasermaterial mit einem Mittel enthaltend NaBF₄ ausrüstet.

Database WPI week 2003/17 Thompson Scientific, London, GB, AN2003-173583, XP002516276 und RU 2191 230 C1 offenbaren einen Bauwollteppich, der aus Flammschutzgründen mit K₂ZrF₆ ausgerüstet ist.

CN A 1 876 954 offenbart einen Teppich, bestehend aus Wolle, der mit K₂ZrF₆ als Flammschutzmittel ausgerüstet ist.

Weiter ist aus der DE 28 52 028 A1 bereits bekannt, dass bestimmte fluorsubstituierte Cyclopropancarbonsäure-Phenoxybenzylester, wie 3-(2,2-Dichlorvinyl)-2,2-dimethylcyclopropancarbonsäure-(3-phenoxybenzyl)-ester ("Permethrin") und 3-(2,2-Dimethylvinyl)-2,2-dimethylcyclopropancarbonsäure-(3-phenoxybenzyl)-ester (vgl. JP 058341) zur Bekämpfung von Textilschädlingen verwendet werden können. Die Wirkung von Permethrin gegen Textilschädlinge ist jedoch insbesondere bei niedrigen Aufwandmengen nicht zufriedenstellend und wird zudem durch Waschen oder chemische Reinigung der Textilien vermindert.

Ausgehend von dem Stand der Technik lag der vorliegenden Erfindung die Aufgabe zugrunde, ein Verfahren zum Schutz von natürlichen Fasermaterialien, insbesondere von Proteinfasermaterialien und Zellulosefasermaterialien zur Verfügung zu stellen. Das Verfahren soll einen dauerhaften Schutz gegen Fraßschäden gewährleisten, wobei die Schutzwirkung sogar nach mehreren Wasch- und Reinigungszyklen nahezu unbeeinträchtigt bleiben soll.

Diese Aufgabe löst die Erfindung durch ein Verfahren zur Ausrüstung von natürlichen Fasermaterialien wie Proteinfasermaterial und Zellulosefasermaterialien gegen den Befall und Fraßschäden durch Schädlinge, dadurch gekennzeichnet, dass man das natürliche Fasermaterial mit einem oder mehreren Mittel(n) enthaltend eine oder mehrere Verbindung(en) ausgewählt aus K₂TiF₆ und Na₂TiF₆ ausrüstet. Die vorstehend genannten Verbindungen sind leicht auf natürlichen Fasermaterialien applizierbar und gewährleisten einen effektiven und lang anhaltenden Schutz gegen Fraßschäden.

Der Ausdruck "lang anhaltend" bedeutet in dem vorliegenden Fall, dass die erfindungsgemäßen Mittel über einen Zeitraum von Monaten und Jahren ihre Wirkung gegenüber Schädlingen entfalten. Hierbei soll die Schutzwirkung sogar durch mehrere Wasch- und Reinigungszyklen nicht merklich beeinträchtigt werden. Praktisch besonders wichtig ist dabei die Wirksamkeit und damit die Anwendung der erfindungsgemäßen Mittel gegen die Larven der Kleidermotte (*Tineola bisselliella*), der Pelzmotte (*Tinea translucens*) und vor allem der Samenmotte (*Hofmannophila pseudopretella*) sowie gegen die Larven der Pelz- und Teppichkäfer (*Attagenus spec.* bzw. *Anthrenus spec*.), z.B. des Wollkraut-Blütenkäfers (*Anthrenus verbasci*), des Bibanellen-Blütenkäfers (*Anthrenus pimpinellae*), des gemeinen Teppichkäfers (*Anthrenus scorphilariae*), des Bebänderten Teppichkäfers (*Anthrenus fasciatus*), des Gefleckten Pelzkäfers (*Attagenus pellio*), und vor allem des Dunklen Pelzkäfers (*Attagenus piceus*) und des Teppichkäfers (*Anthrenus vorax*).

Bei den zu schützenden natürlichen Fasermaterialien im Sinne der Erfindung handelt es sich um Fasern, Textilien, textile Flächengebilde, Dämmmaterialien, Pelze und Federn. Die Fasern dieser Materialien sind allgemein Proteinfasern, wie Wolle oder Seide oder Zellulosefasern wie insbesondere Flachs. Gemäß einer Ausführungsform der Erfindung handelt es sich bei den zu schützenden natürlichen Fasermaterialien um Dämmmaterialien aus Flachs. Gemäß einer weiteren Ausführungsform der Erfindung handelt es sich bei den zu schützenden natürlichen Fasermaterialien um Textilien aus Wolle, wie Wolldecken, Wollteppiche, Wollwäsche, Wollkleider und Wirkwaren bzw. wollhaltige Textilien, wie Mischgewebe, deren eine Komponente Wolle ist, z.B. Mischgewebe aus Wolle und anderen Natur- bzw. Kunstfasern, vorzugsweise Baumwolle oder aus Wolle und Kunstfasern andererseits auch um Pelzen und Fellen. Bei dem zu schützenden Fasermaterial kann es sich ferner um wollhaltiges Fasermaterial handeln. Bei dem wollhaltigen Fasermaterial kann es sich um Wolle allein oder um Mischungen aus z.B. Wolle/Polyamid oder Wolle/Polyester handeln. Das Fasermaterial kann in den verschiedensten Verarbeitungsstadien vorliegen, z.B. in Form von Garnen, Flocken, Kammzug, Maschenware wie Strickware oder Gewirke, als Faserfließstoff oder vorzugsweise als Gewebe.

Die vorliegende Erfindung betrifft ein Verfahren zum Schutz von natürlichen Fasermaterialien, insbesondere von Woll- und Cellulosematerialien, gegen den Befall durch Schädlinge, wie Motten- und Käferlarven, das sich dadurch auszeichnet, dass man das zu schützende Material mit einer oder mehreren Verbindungen aus der Gruppe K₂TiF₆ und Na₂TiF₆ ausrüstet. Zu diesem Zweck wird in der Regel ein Wirkstoff bzw. eine Wirkstoffkombination, die neben dem bzw. den erfindungsgemäßen Mittel(n) gegebenenfalls noch weitere Schutzmittel und/oder Hilfsmittel in einem Anteil von 1 bis 99 Gew.-% enthält, in eine Applikationsflotte eingebracht, der gegebenenfalls noch übliche Textilhilfsmittel und/oder Farbstoffe zugefügt werden können und mit dieser Flotte das zu schützende Material ausgerüstet. Die zu schützenden Materialien können z.B. durch heiße oder kalte wässrige Färbe-, Bleich- oder Nachbehandlungsbäder, die einen bestimmten Teil des erfindungsgemäßen Mittels enthalten, das in das jeweilige Applikationsbad eingebracht wird, imprägniert werden, wobei verschiedene Textilausrüstungsverfahren, wie z.B. das Foulard- oder Ausziehverfahren in Frage kommen.

Eine Zusammensetzung enthaltend eine oder mehrere Verbindung(en) ausgewählt aus K₂TiF₆ und Na₂TiFₑ wird nachstehend als "erfindungsgemäßes Mittel zum Schutz von natürlichen Fasermaterialien wie Proteinfasermaterial und Zellulosefasermaterialien gegen den Befall und Fraßschäden durch Schädlinge" bezeichnet werden. Dieses erfindungsgemäße Mittel kann neben den vorstehend genannten Verbindungen ein oder mehrere weitere Bestandteile aufweisen. Der oder die weiteren Bestandteil(e) können dabei eine insektizide Wirkung aufweisen, oder sie können keine insektizide Wirkung aufweisen, also etwa ein Lösungsmittel, Dispergiermittel oder Suspensionsmittel sein.

In einer weiteren Ausführungsform der Erfindung besteht das erfindungsgemäße Mittel im Wesentlichen aus einer oder mehreren Verbindung(en) ausgewählt aus K₂TiF₆ und Na₂TiF₆ als insektizider Wirkkomponente, d.h., dass neben diesen Verbindungen noch ein oder auch mehrere andere Insektizide enthalten sein können, diese aber in einer solchen Menge vorliegen, in der kein Beitrag des jeweiligen von den vorstehend genannten Verbindungen verschiedenen Insektizids zum Gesamteffekt der entstehenden Mischung vorliegt. Wenn also die insektizide Wirkung des erfindungsgemäßen Mittels, das - neben den vorstehend genannten Verbindungen als wesentlichem Bestandteil - noch ein oder mehrere weitere Insektizide in untergeordneter bzw. geringfügiger Konzentration aufweist, nicht verändert ist gegenüber dem Einsatz des erfindungsgemäßen Mittels, wird dieses im Zusammenhang mit der vorliegenden Erfindung als "im Wesentlichen bestehend" bezeichnet. Es können ein oder mehrere weitere Bestandteile ohne eine insektizide Wirkung vorhanden sein, etwa Lösungsmittel.

In einer weiteren Ausführungsform kann das erfindungsgemäße Mittel aus den vorstehend genannten Verbindungen als einzigem insektiziden Wirkstoff bestehen, also einem Wirkstoffgehalt von 100% von einer oder mehreren Verbindung(en) ausgewählt aus K₂TiF₆ und Na₂TiF₆. In einem solchen Fall ist es lediglich möglich, dass ein oder mehrere weitere Bestandteile ohne eine insektizide Wirkung vorhanden sind, etwa Lösungsmittel. Diese weiteren Bestandteile können allgemein in einem Anteil von 1 bis 99 Gew.%, bevorzugt in einem Anteil von 1 bis 40 Gew.-%, besonders bevorzugt in einem Anteil von 1 bis 20 Gew.% neben dem erfindungsgemäßen Mittel vorhanden sein.

Die jeweils eingesetzte Menge an erfindungsgemäßem Mittel, die in das jeweilige Applikationsbad eingebracht wird, hängt von dem zu schützenden Material und der Applikationsmethode ab. Diese Menge wird üblicherweise jedoch so bemessen, dass nach der Applikation auf das zu schützende Material letzteres etwa 0,05 bis 6,0 Gew.-%, bevorzugt 0,1 bis 3,0 Gew.-%, besonders bevorzugt 0,5 bis 2,0 Gew.-% des erfindungsgemäßen Mittels, enthält. Das erfindungsgemäße Mittel wird dabei mit Hilfe einer wässrigen Flotte, die 0,05 bis 6 Gew.%, bevorzugt 0,1 bis 3 Gew.%, besonders bevorzugt 0,5 bis 2 Gew.-%, bezogen auf das Gewicht des zu schützenden Materials, des erfindungsgemäßen Mittels enthält, aufgebracht. Um eine zufriedenstellende Ausrüstung der zu schützenden Materialien zu gewährleisten, sollte die wässrige Flotte bei der Applikation der erfindungsgemäßen Mittel einen pH-Wert von 1 bis 5, bevorzugt von 2 bis 3 aufweisen. Zur Einstellung des pH-Wertes der wässrigen Flotte können allgemein alle mineralischen und organischen Säuren wie HCl, H₂SO₄, H₃PO₄, Zitronensäure, Ameisensäure und Essigsäure verwendet werden.

Während der Applikation sollte die Temperatur der Applikationsflotte 20 bis 100 °C, bevorzugt 60 bis 90 °C, besonders bevorzugt 70 bis 80 °C betragen. Die zur Ausrüstung der zu schützenden Materialien nötige Zeit variiert je nach zu schützendem Material und Ausrüsttemperatur und beträgt allgemein 10 bis 60 Minuten, bevorzugt 30 bis 50 Minuten, besonders bevorzugt 40 bis 45 Minuten. Das Flottenverhältnis variiert je nach zu schützendem Material und Applikationsverfahren und beträgt üblicherweise 1:10 bis 1:30. Nach der Ausrüstung wird das Material warm und kalt gespült und bei den üblichen Temperaturen getrocknet. Die somit erhaltenen Materialien zeichnen sich durch einen dauerhaften Schutz gegen Schädlingsbefall aus. Dieser Schutz ist auch nach mehreren Waschgängen bei hohen Temperaturen, wie bei 95 °C, noch vorhanden.

Die Anwendung kann praktisch in allen Bearbeitungszuständen und allen in der Textilindustrie üblichen Nassprozessen an Wolle, Wolltextilien und wollhaltigen Textilien erfolgen. Die Applikation der erfindungsgemäßen kann beispielsweise beim Färbebad vor dem üblichen Färbeprozess zugesetzt werden, es kann aber auch beim Waschen von Wolle appliziert werden. Bevorzugt wird die Behandlung in wässrigem Medium durchgeführt.

Gemäß einer weiteren Ausführungsform der Erfindung werden die erfindungsgemäßen Mittel chemisch oder physikalisch an den natürlichen Fasern, insbesondere den Zellulosefasern verankert. Da die Zellulosefasern reaktive Gruppen wie Hydroxylgruppen aufweisen, ist es ebenfalls möglich, die erfindungsgemäßen Mittel ausgewählt aus der Gruppe K₂TiF₆ und Na₂TiF₆ mit Hilfe eines geeigneten Binders, beispielsweise eines Isocyanates, insbesondere eines geschützten oder blockierten Isocyanates dauerhaft an der Faser zu verankern. Als Binder, die der Verankerung der Salze bzw. der erfindungsgemäßen Mittel dienen können seien beispielhaft Acrylsäure/Butylester, Acrylat/Acetatcopolymere, Polyvinylacetat, Acrylsäureester/Acrylnitril, Polyacrylate, Polyurethane, Acrylsäureestercopolymerisate, Acrylsäure/Acrylamidcopolymerisate und Acrylat/Polyurethanmischungen genannt. Die Verankerung mit Hilfe eines oder mehrerer der vorstehend genannten Binder bzw. Bindemittel kann dabei alternativ oder ergänzend zu der sauren Ausrüstung in wässrigem Millieu erfolgen. Gemäß einer Ausführungsform der Erfindung werden die Fasern in saurer wässriger Lösung mit dem erfindunsgemäßen Mittel ausgerüstet und anschließend mit Hilfe eines oder mehrerer der vorstehend genannten Binder zusätzlich ausgerüstet. Hierdurch wird ein besonders dauerhafter Schutz der Fasern gegen Schädlingsbefall bewirkt. Gemäß einer weiteren Ausführungsform der Erfindung werden die Fasern ausschließlich unter Zuhilfenahme eines oder mehrerer Binder ausgerüstet.

Die vorliegende Erfindung betrifft ferner die Verwendung einer oder mehrerer Verbindung(en) aus der Gruppe K₂TiF₆, Na₂TiF₆, Na₂ZrF₆ und K₂ZrF₆ als Insektenschutzmittel zum Schutz von natürlichen Fasermaterialien, wie Proteinfasermaterial und Zellulosefasermaterialien gegenüber Insektenbefall. Ebenfalls betrifft die Erfindung natürliche Fasermaterialien sowie aus diesen hergestellte Textilien oder Dämmstoffe, die eines oder mehrere der erfindungsgemäßen Mittel enthalten.

Mittels des erfindungsgemäßen Verfahrens ist es möglich, natürliche Fasermaterialien wie Wolle oder insbesondere Wolle/Polyester-Fasergemische unter einwandfreiem Schutz des Wollanteils, d.h. unter Erhaltung der wichtigen, fasertechnologischen Eigenschaften der Wolle, wie Reißfestigkeit, Berstbeständigkeit und Dehnung auszurüsten.

Die folgenden Beispiele veranschaulichen die Erfindung.

### Beispiel 1: Ausrüstung von Wolle mit K₂TiF₆

80 g, 40 g bzw. 20 g K₂TiF₆ werden in jeweils 201 kochendem entionisiertem Wasser gelöst. Nach dem Abkühlen auf 40°C wird der pH-Wert der Lösung mittels HCl auf pH 2 bis 3 eingestellt.

Jeweils 1000 g Schafswolle werden bei einer Temperatur von 70 °C über einen Zeitraum von 45 Minuten jeweils mit einer der vorstehend hergestellten Flotte behandelt (Flottenverhältnis 1:20). Anschließend wird die ausgerüstete Wolle mit kaltem Wasser gespült und bei einer Temperatur von 40 °C getrocknet. Es werden 3 Wollchargen erhalten, die mit 1 gew.%iger, 2 gew.%iger bzw. 4 gew.-%ig mit K₂TiF₆ ausgerüstet sind.

### Beispiel 2: Resistenzprüfung nach ISO 3998

Für die Resistenzprüfung wurden Teppichkäferlarven (*Anthrenus flavipes*) ausgewählt.

Die durchgeführte Prüfung erfolgte gemäß ISO 3998, Ausgabe 1977, wobei die Proben und Kontrollproben bei konstantem Klima mit den Larven der ausgewählten Testinsekten 14 Tage lang in Kontakt gebracht wurden. Der Massenverlust aller Proben, das Ausmaß des Befalls und der Zustand der Testlarven waren ausschlaggebend für die Beurteilung der Resistenz gegenüber den Fraßinsekten. Die Prüfungen wurden bei 27 °C und 65 % relativer Feuchte durchgeführt.

### 2.1 Ergebnisse der mit der 1 % K₂TiF₆ ausgerüsteten Charge

Larvenzustand zum Testende

Zum Testende war der Großteil der Larven abgestorben. Die in der Spalte "geschädigt" aufgelisteten Larven gaben fast kein Lebenszeichen mehr von sich. Es konnten nur vereinzelte Exkremente festgestellt werden.

### Gewichtsverlust durch Fraß

Bei den Wollproben betrug der mittlere Gewichtsverlust durch Fraß 5,4 mg; bei den Kontrollproben betrug der mittlere Gewichtsverlust durch Fraß 33,9 mg.

**Tabelle 1**

| Prüfmaterial | | | | Kontrollmaterial | | | |
|---|---|---|---|---|---|---|---|
| Ident-Nr. | lebend | tot | geschädigt | Ident-Nr. | lebend | tot | geschädigt |
| P1/1 | 3 | 7 | 5 | K1 | 15 | 0 | 0 |
| P1/2 | 5 | 8 | 2 | K2 | 14 | 1 | 0 |
| Mittlerer Gewichtsverlust P1/1..P1/2 5,4 mg | | | | Mittlerer Gewichtsverlust K1/1..K2/2 33,9 mg | | | |

### 2.2 Ergebnisse der mit der 2 % K₂TiF₆-Flotte ausgerüsteten Charge

Larvenzustand zum Testende

Zum Testende waren alle Larven abgestorben. Die in der Spalte "geschädigt" aufgelisteten Larven gaben fast kein Lebenszeichen von sich. Es konnten nur vereinzelte Exkremente festgestellt werden.

Gewichtsverlust durch Fraß

Bei den Wollstoffproben betrug der mittlere Gewichtsverlust durch Fraß 5,6 mg; bei den Kontrollproben betrug der mittlere Gewichtsverlust durch Fraß 33,9 mg.

**Tabelle 2**

| Prüfmaterial | | | | Kontrollmaterial | | | |
|---|---|---|---|---|---|---|---|
| Ident-Nr. | lebend | tot | geschädigt | Ident-Nr. | lebend | tot | geschädigt |
| P2/1 | 0 | 10 | 5 | K1 | 15 | 0 | 0 |
| P2/2 | 0 | 12 | 3 | K2 | 14 | 1 | 0 |
| Mittlerer Gewichtsverlust P1/1..P1/2 5,4 mg | | | | Mittlerer Gewichtsverlust K1/1..K2/2 33,9 mg | | | |

### 2.3 Ergebnisse der mit der 4 % K₂TiF₆ ausgerüsteten Charge

Larvenzustand zum Testende

Zum Testende waren alle Larven abgestorben. Die in der Spalte "geschädigt" aufgelisteten Larven gaben fast kein Lebenszeichen von sich. Es konnten nur vereinzelte Exkremente festgestellt werden.

Gewichtsverlust durch Fraß

Bei den Wollstoffproben betrug der mittlere Gewichtsverlust durch Fraß 1,5 mg; bei den Kontrollproben betrug der mittlere Gewichtsverlust durch Fraß 33,9 mg.

**Tabelle 3**

| Prüfmaterial | | | | Kontrollmaterial | | | |
|---|---|---|---|---|---|---|---|
| Ident-Nr. | lebend | tot | geschädigt | Ident-Nr. | lebend | tot | geschädigt |
| P3/1 | 1 | 10 | 4 | K1 | 15 | 0 | 0 |
| P3/2 | | 8 | 7 | K2 | 14 | 1 | 0 |
| Mittlerer Gewichtsverlust P1/1..P1/2 5,4 mg | | | | Mittlerer Gewichtsverlust K1/1..K2/2 33,9 mg | | | |

Wie aus den unter 2.1 bis 2.3 dargestellten Ergebnissen hervorgeht, liefert das erfindungsgemäße Mittel hervorragenden Schutz gegenüber Insektenfraß.

## Patentansprüche

1. Verfahren zur Ausrüstung von natürlichen Fasermaterialien gegen Befall und Fraßschäden durch Schädlinge, **dadurch gekennzeichnet, dass** man das natürliche Fasermaterial mit einem oder mehreren Mittel(n) enthaltend eine oder mehrere Verbindung(en) ausgewählt aus K₂TiF₆ und Na₂TiF₆ ausrüstet.

2. Verfahren nach Anspruch 1, **dadurch gekennzeichnet, dass** man die Ausrüstung in wässrigem Medium vornimmt.

3. Verfahren nach Anspruch 1 oder 2, **dadurch gekennzeichnet, dass** man die Ausrüstung beim einem pH-Wert von 1 bis 5 durchführt.

4. Verfahren gemäß einem der Ansprüche 1 bis 3, **dadurch gekennzeichnet, dass** man das erfindungsgemäße Mittel bei der Ausrüstung in einer Konzentration von 0,1 bis 6 Gew.%, bezogen auf das Gewicht des auszurüstenden Materials, einsetzt.

5. Natürliches Fasermaterial ausgerüstet mit einem Mittel zum Schutz von natürlichen Fasermaterialien gegen den Befall und Fraßschäden durch Schädlinge, **gekennzeichnet durch** einen Gehalt an einer oder mehreren Verbindung(en) ausgewählt aus K₂TiF₆ und Na₂TiF_{6.}

6. Natürliches Fasermaterial nach Anspruch 5, wobei das erfindungsgemäße Mittel in einem Anteil von 0,05 bis 6 Gew.-% auf dem natürlichen Fasermaterial vorhanden ist.

7. Natürliches Fasermaterial nach Anspruch 5 oder 6, ausgewählt aus Wolle, Seide, Flachs, Pelzen und Federn.

8. Natürliches Fasermaterial nach einem der Ansprüche 5 bis 7, wobei das natürliche Fasermaterial ein Mischgewebe aus Naturfasern und synthetischen Fasern ist.

9. Natürliches Fasermaterial nach einem der Ansprüche 5 bis 8, wobei das natürliche Fasermaterial ein Dämmmaterial, ein Textil aus Wolle, eine Wolldecke, ein Wollteppich, Wollwäsche, ein Wollkleide, eine Wirkware, ein wollhaltiges Textil, ein Garn, ein Kammzug oder ein Faserfließstoff ist.

10. Verwendung eines oder mehrerer Mittel **gekennzeichnet durch** einen Gehalt an einer oder mehreren Verbindung(en) ausgewählt aus K₂TiF₆, Na₂TiF₆, Na₂ZrF₆ und K₂ZrF₆ zur Verhinderung von Befall und Fraßschäden **durch** Schädlinge bei natürlichen Fasermaterialien.

## Claims

1. Process for providing a finish for natural fiber materials against pest attack and damage, **characterized in that** the natural fiber material is finished with one or more agent(s) containing one or more compound (s) selected from K₂TiF₆ and Na₂TiF₆,

2. Process according to claim 1, **characterized in that** the finishing is done in aqueous medium.

3. Process according to claim 1 or 2 **characterized in that** the finishing is done at a pH-value of 1 to 5.

4. Process according to one of the claims 1 to 3 **characterized in that** the compound according to the present invention is applied during finishing in a concentration of 0,1 to 6 % by weight, relating to the weight of the material to be finished.

5. Natural fiber material finished with an agent for the protection of natural fiber materials against pest attack and damage containing one or more compound (s) selected from K₂TiF₆ und Na₂TiF₆.

6. Natural fiber material according to claim 5, whereby the compound according to the invention is present in an amount of 0.05 to 6 % by weight of the natural fiber material.

7. Natural fiber material according to claim 5 or 6, selected from wool, silk, flax, fur and feathers.

8. Natural fiber material according to one of claims 5 to 7 whereby the natural fiber material is a blended fabric of natural and synthetic fibers.

9. Natural fiber material according to one of claims 5 to 8 whereby the natural fiber material is an insulating material, a textile made of wool, a woolen blanket, a woolen carpet, woolen clothes, a woolen dress, knit fabric, a wool containing textile, a yarn, a combed top or a non-woven fabric.

10. Use of one or more agents **characterized by** a content of one or more compound (s) selected from K₂TiF₆, Na₂TiF₆, Na₂ZrF₆ und K₂ZrF₆ to prevent damage of pest attack and damage at natural fiber materials.

## Revendications

1. Procédé pour l'apprêt de matériaux fibreux naturels contre une infestation et des dégâts par dévoration par des animaux nuisibles, **caractérisé en ce qu'**on apprête le matériau fibreux naturel avec un ou plusieurs agents contenant un ou plusieurs composés choisis parmi K₂TiF₆ et Na₂TiF₆.

2. Procédé selon la revendication 1, **caractérisé en ce qu'**on réalise l'apprêt en milieu aqueux.

3. Procédé selon la revendication 1 ou 2, **caractérisé en ce qu'**on réalise l'apprêt un pH de 1 à 5.

4. Procédé selon l'une quelconque des revendications 1 à 3, **caractérisé en ce qu'**on utilise l'agent selon l'invention lors de l'apprêt en une concentration de 0,1 à 6% en poids, par rapport au poids du matériau à apprêter.

5. Matériau fibreux naturel apprêté avec un agent pour la protection de matériaux fibreux naturels contre une infestation et des dégâts par dévoration par des animaux nuisibles, **caractérisé par** une teneur en un ou plusieurs composés choisis parmi K₂TiF₆ et Na₂TiF₆.

6. Matériau fibreux naturel selon la revendication 5, l'agent selon l'invention étant présent en une proportion de 0,05 à 6% en poids sur le matériau fibreux naturel.

7. Matériau fibreux naturel selon la revendication 5 ou 6, choisi parmi la laine, la soie, le lin, les fourrures et les plumes.

8. Matériau fibreux naturel selon l'une quelconque des revendications 5 à 7, le matériau fibreux naturel étant un tissu mixte de fibres naturelles et de fibres synthétiques.

9. Matériau fibreux naturel selon l'une quelconque des revendications 5 à 8, le matériaux fibreux naturel étant un matériau isolant, un textile en laine, une couverture en laine, un tapis en laine, du lingue en laine, une robe en laine, un vêtement tricoté, un textile contenant de la laine, un fil, de la laine peignée ou une toile en fibres.

10. Utilisation d'un ou de plusieurs agents, **caractérisés par** une teneur en un ou plusieurs agents contenant un ou plusieurs composés choisis parmi K₂TiF₆ et Na₂TiF₆, Na₂ZrF₆ et K₂ZrF₆ pour empêcher une attaque et des dégâts par dévoration par des animaux nuisibles dans le cas de matériaux fibreux.
